# EUROPEAN PATENT SPECIFICATION

(11) **EP 2 913 259 B1**
(45) Date of publication and mention of the grant of the patent: **18.08.2021**
(21) Application number: 15156894.6
(22) Date of filing: 27.02.2015
(51) Int. Cl.: B62J 3/14, B62J 6/24, B62J 43/13, B62J 43/23, B62M 6/40, B62M 6/90, B62H 3/00

(54) **MANAGEMENT SYSTEM OF ELECTRICALLY ASSISTED BICYCLE, PARKING STATION SYSTEM, ELECTRICALLY ASSISTED BICYCLE, ELECTRICALLY ASSISTED BICYCLE PROVISION SYSTEM AND METHOD FOR MANAGEMENT OF AN ELECTRICALLY ASSISTED BICYCLE AND PARKING STATION**
VERWALTUNGSSYSTEM EINES ELEKTRISCH UNTERSTÜTZTEN FAHRRADS, PARKSTATIONSSYSTEM, ELEKTRISCH UNTERSTÜTZTES FAHRRAD, SYSTEM ZUR BEREITSTELLUNG EINES ELEKTRISCH UNTERSTÜTZTEN FAHRRADS UND VERFAHREN ZUR VERWALTUNG EINES ELEKTRISCH UNTERSTÜTZTEN FAHRRADS UND EINER PARKSTATION
SYSTÈME DE GESTION DE BICYCLETTE SEMI-ÉLECTRIQUE, SYSTÈME DE STATION DE STATIONNEMENT, BICYCLETTE SEMI-ÉLECTRIQUE, SYSTÈME DE FOURNITURE DE BICYCLETTE ASSISTÉE ÉLECTRIQUEMENT ET PROCÉDÉ DE GESTION D'UNE BICYCLETTE SEMI-ÉLECTRIQUE ET POSTE DE STATIONNEMENT

(30) Priority: 28.02.2014 JP 2014039837
(43) Date of publication of application: 02.09.2015
(73) Proprietor: Yamaha Hatsudoki Kabushiki Kaisha, Iwata-shi, Shizuoka 438-8501 (JP)
(72) Inventor: Kinpara, Yuki, Iwata-shi, Shizuoka 438-8501 (JP); Uda, Masatsugu, Iwata-shi, Shizuoka 438-8501 (JP); Negoro, Masanori, Iwata-shi, Shizuoka 438-8501 (JP)
(74) Representative: Grünecker Patent- und Rechtsanwälte PartG mbB

(56) References cited:
- EP-A2- 0 877 342
- EP-A2- 2 039 598
- DE-U1-202013 002 558
- FR-A1- 2 978 415
- US-A1- 2008 297 108
- None

## Description

The present invention relates to a parking station system for keeping the electrically assisted bicycle, a management system comprising an electrically assisted bicycle and a parking station system, and a method for management of an electrically assisted bicycle and parking station for parking the electrically assisted bicycle.

In the related art, an electrically assisted bicycle, which includes an electric motor for assisting a pedal force which is a force applied to a pedal by a user, is available. JP 2007-223593 A discloses a storing system of the electrically assisted bicycles for renting out the bicycle to users, and a plurality of locking devices (a locking terminal post in JP 2007-223593 A) installed to be aligned in order to lock the bicycles in a parking station where the bicycles are stored.

In the parking station, distances between adjacent bicycles are smaller, and thus the user may unintentionally presses pedals when the bicycle is coupled to the lock device. In this case, the electric motor drives and then a force from the electric motor larger than the force applied to the pedals by the user may act on the lock device and the body of bicycle. If reinforcement structures that can withstand the force are applied to the lock device and the body of bicycle, increase in the manufacturing cost of them may be caused.

Prior art document EP 0 877 342 A2 discloses the preamble of claims 1 and 11 and shows a battery rental system for two wheeled electric vehicles. Said system comprises a battery supply device holding a plurality of batteries in a locked state, for charging said batteries, and for unlocking and supplying a desired one of said batteries. A user discriminating device is provided for discerning users who shall use said batteries. A selecting device is provided for selecting from among usable batteries. A rental return control device is provided for controlling said battery supply device, said user discrimination device, and said selection device, and for performing rental and return processing of said batteries. A user management device is provided for managing use conditions of users who use said batteries.

After confirmation that a user is an authorized user by bringing a user certification into proximity to a user discriminating device, following the guidance of a touch panel display device, a desired battery is selected, and the battery, for which a lock thereof is unlocked, is taken out from a battery supply device. Thereafter, the battery is installed in a two electric wheeled vehicle in a parking apparatus, and the two wheeled electric vehicle is unlocked and used.

When the two wheeled electric vehicle is returned a "return mode" is processed. The touch panel display device, in the case that the two wheeled electric vehicle has not been returned, displays a vehicle return prompt screen, prompting the user to return the vehicle. Then, the user returns the two wheeled electric vehicle to a prescribed position in the parking apparatus. When the two wheeled electric vehicle is returned to a prescribed parking apparatus, a sensor disposed in the positioning determining device detects the returned condition, and transmits a return detection signal to the rental return control device. As a result, the rental return control device judges that the prescribed two wheeled electric vehicle is now returned, and performs confirmation of the type of returned vehicle based on the stock data. When the returned vehicle is a two wheeled electric vehicle which has a detachable battery, it is confirmed whether or not the battery has been returned or not. In the case that the battery has not been returned, the touch panel display device displays a battery return prompt screen, prompting the user to return the battery. Then, the user takes out the battery from the battery case, and places the battery into a receptacle of the battery supply device, and return of the battery is detected by the rental return control device. After return of both the two wheeled electric vehicle and the battery, the user returns the key to complete the process.

An object of the invention is to provide a parking station system which is installed in a parking station, a management system comprising an electrically assisted bicycle and a parking station system, and a method for management of an electrically assisted bicycle and parking station for parking the electrically assisted bicycle, which can reduce a need for reinforcement of a lock device provided in a parking station or the like.

According to the present invention, said object is solved by a parking station system having the features of independent claim 1. Preferred embodiments are laid down in the dependent claims. Moreover, said object is solved by a management system according to claim 10. Furthermore, said object is solved by a method for management of at least one electrically assisted bicycle and at least one parking station for parking the electrically assisted bicycle according to claim 11.
(1) Accordingly, there is provided a management system of an electrically assisted bicycle, including: an electrically assisted bicycle; and a parking station system (10) which is installed in a parking station for parking the electrically assisted bicycle. The electrically assisted bicycle includes an electric motor is configured to assist a pedal force applied to a pedal, and a battery receptacle configured so that a battery for supplying electronic power to the electric motor is attached to and detached from the battery receptacle. The parking station system includes a locking device configured to connect the electrically assisted bicycles, a first detection device configured to detect that the electrically assisted bicycle is placed in the parking station, a notification device configured to generate a guidance when the first detection device detects that the bicycle is placed in the parking station, a second detection device configured to detect that a detection object is proximate to the second detection device, where the detection object is the battery or an accessory of the battery, and a control device configured to stop the notification device from generating the guidance when the second detection device detects the proximity of the detection object.
   In this management system and the parking station system, the battery or the accessory of the battery has a function of stopping the guidance from the notification device. Thus, an operation of bringing the battery or the accessory into the proximity of the second detection device is necessary in order for a user to stop the guidance from the notification device. For this reason, the user surely detaches the battery from the bicycle body, and a situation where the electrically assisted bicycle is still supplied with electronic power does not continue for a long time. As a result, a situation in which a large force by driving the electric motor acts on the locking device or the bicycle body can be prevented, and thus it is possible to reduce the necessity of reinforcing the locking device or the body of the electrically assisted bicycle. Note that, when the second detection device can detect the proximity of the battery itself, a battery may not necessarily include the accessory.
(2) In the management system and the parking station system of (1), the second detection device may be configured not to be able to detect the detection object in a state where the bicycle is placed in the parking station and the detection object is attached to the battery receptacle. According to this, it is possible to more reliably ensure detachment of the battery by the user.
(3) In the management system and the parking station system of (2), a detectable distance of the second detection device may be shorter than a distance between the detection object and the second detection device in a state where the bicycle is placed in the parking station and the detection object is attached to the battery receptacle. According to this, in a state where the electrically assisted bicycle is placed in the parking station and the detection object is attached to the battery receptacle, the detection of the detection target by the second detection device can be prevented.
(4) In the management system and the parking station system of any one of (1) to (3), ID information which is unique to the battery may be recorded in the detection object. The second detection device may have a function of reading the ID information. According to this, by using the battery or the accessory of the battery, it is possible to manage an usage state of the electrically assisted bicycle.
(5) In the management system and the parking station system of any one of (1) to (4), the accessory of the battery may be associated with the battery.
(6) In the management system and the parking station system of any one of (1) to (5), the control device stops the notification device from generating the guidance when at least one of a first condition that the proximity of the detection object is detected and a second condition which is different from the first condition is satisfied.
(7) In the management system and the parking station system of (6), the second condition is related to a period in which the guidance is generated. According to this, it is possible to prevent the notification device from continuously generating unnecessary guidance.
(8) In the management system and the parking station system of (6) or (7), the control device may be configured to notify a host device that the second condition is satisfied when the second condition is satisfied.
(9) In the management system and the parking station system of (8), the host device may be configured to notify the user of a predetermined information. According to this, it is possible to notify the user that the user still has the battery mounted on the bicycle body, or that an operation of bringing the detection object into the proximity of the second detection device has not been performed. Thus, it is possible to prevent the user from mistakenly using the management system.
(10) In the management system and the parking station system of any one of (1) to (9), the first detection device may be a sensor which detects that the locking device and the electrically assisted bicycle are connected to each other.
(11) In the management system and the parking station system of any one of (1) to (9), the first detection device may be a communication device which is provided in the parking station, and communicates with a communication module which is provided in the bicycle body or the battery.

### BRIEF DESCRIPTION OF THE DRAWINGS

Fig. 1 is a view illustrating a management system of an electrically assisted bicycle according to a preferred embodiment.
Figs. 2A and 2B are views illustrating a parking station and the electrically assisted bicycle which is placed in the parking station. Fig. 2A is a side view, and Fig. 2B is a plan view.
Fig. 3 is a block diagram illustrating a configuration of a parking station system.
Fig. 4 is a view illustrating an example of a table in which user information is stored.
Fig. 5 is a view illustrating an example of a table in which usage history information is stored.
Fig. 6 is a flow chart illustrating an example of processing which is performed by a control device for the parking station when the user starts using the electrically assisted bicycle.
Fig. 7 is a flow chart illustrating an example of processing which is performed by the control device for the parking station when the user finishes using the electrically assisted bicycle.

### DETAILED DESCRIPTION OF THE PREFERRED EMBODIMENTS

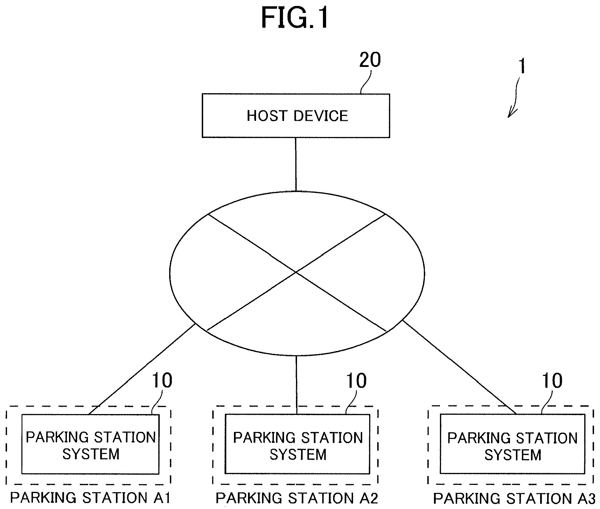

Hereinafter, a preferred embodiment will be described with reference to the drawings. Fig. 1 is a view illustrating a management system 1 of an electrically assisted bicycle according to the preferred embodiment.

The management system 1 is a system for managing a plurality of electrically assisted bicycles to be rented out to a registered user. The management system 1 includes a parking station system 10 which is installed in parking stations A1, A2, and A3 for the electrically assisted bicycles. Preferably, as illustrated in Fig. 1, the management system 1 includes a plurality of parking station systems 10, and the parking station systems 10 are respectively installed in the plurality of parking stations A1, A2, and A3 provided in a town. The user may return the bicycle to the same station where the user starts renting the bicycle, and may return the bicycle to a different station. The number of the parking stations is not limited thereto. In other words, the management system 1 may have only one parking station system 10. The management system 1 includes a host device 20. The host device 20 has a data base covering a plurality of users, and manages an usage state of the bicycles and the users. The parking station system 10 is configured to communicate with the host device 20 via a communication network, such as the Internet or a dedicated line.

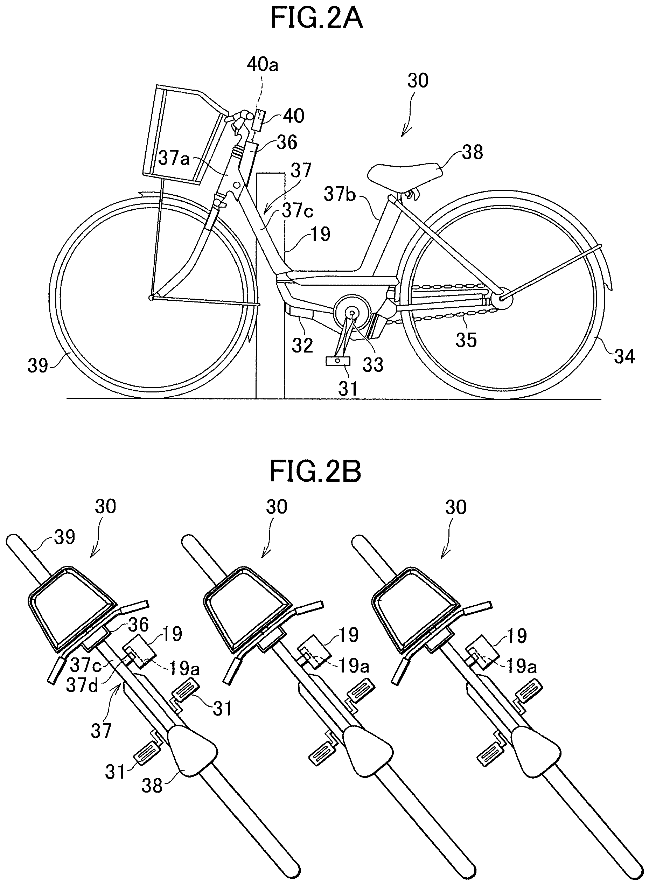

Figs. 2A and 2B are views illustrating the parking station and an electrically assisted bicycle 30 which is placed in the parking station.

As illustrated in Fig. 2A, the electrically assisted bicycle 30 includes a pedal 31, and an electric motor 32 for assisting a pedal force applied to the pedal by the user. The resultant force obtained from a force applied to a pedal crank 33 through the pedal 31 and the force of the electric motor 32 is transferred to a rear wheel 34. In an example of the bicycle 30, the pedal crank 33 is connected to a power transfer mechanism which includes a chain 35 or the like and transfer the force (torque) to the rear wheel 34, and the electric motor 32 is connected to the power transfer mechanism via a reduction gear. The power transfer mechanism may include a gear shift mechanism. The electrically assisted bicycle 30 includes a sensor (not illustrated) which detects torque applied to the pedal crank 33 by a user. The torque to be output from the electric motor 32 (that is, electronic current value supplied to the electric motor 32) is calculated, based on the output value of the sensor.

As illustrated in Fig. 2A, the electrically assisted bicycle 30 includes a battery receptacle 36. A battery 40 for supplying electronic power to the electric motor 32 is attainable to, and detachable from, the battery receptacle 36. In an example of the managing system, individual users own the battery 40. In other words, the battery 40 is distributed in advance from an administrator of the system. In this case, when the battery 40 owned by the users themselves is installed in the battery receptacle 36 of an electrically assisted bicycle 30, the user is allowed to use the bicycle 30. In the example illustrated in Fig. 2A, the battery receptacle 36 is fixed to a head pipe 37a supporting a handle stem, but the position thereof is not limited to the above. For example, the battery receptacle 36 may be fixed to a saddle post 37b supporting a saddle 38. Each of the batteries 40 which will be described in detail later is given an unique ID information. The management system 1 uses the ID information to manage the usage state of the electrically assisted bicycle 30 and the user.

As illustrated in Fig. 2B, the parking station system 10 includes a plurality of locking devices 19 for connecting (locking) the electrically assisted bicycle 30. Preferably, the locking device 19 is configured to support a bicycle body frame 37 of the electrically assisted bicycle 30 so that a position and a posture of the bicycle 30 are fixed. As illustrated in Fig. 2B, an example of the electrically assisted bicycle 30 includes a locked portion 37d which extends laterally from the bicycle body frame 37 (more specifically, a tube 37c which diagonally extends backward and downward from the head pipe 37a in Fig. 2B). The locked portion 37d is fitted to a locking portion (receiving portion) 19a formed in the locking device 19. The locked portion 37d is locked (fastened) with a locking mechanism provided in the locking portion 19a. The locking mechanism of the electrically assisted bicycle 30 is not limited thereto. For example, the locking device 19 may include a chain, and a front wheel 39 or the rear wheel 34 of the electrically assisted bicycle 30 may be connected to the locking device 19 via this chain. In other words, the front wheel 39 or the rear wheel 34 may be used as a locked portion.

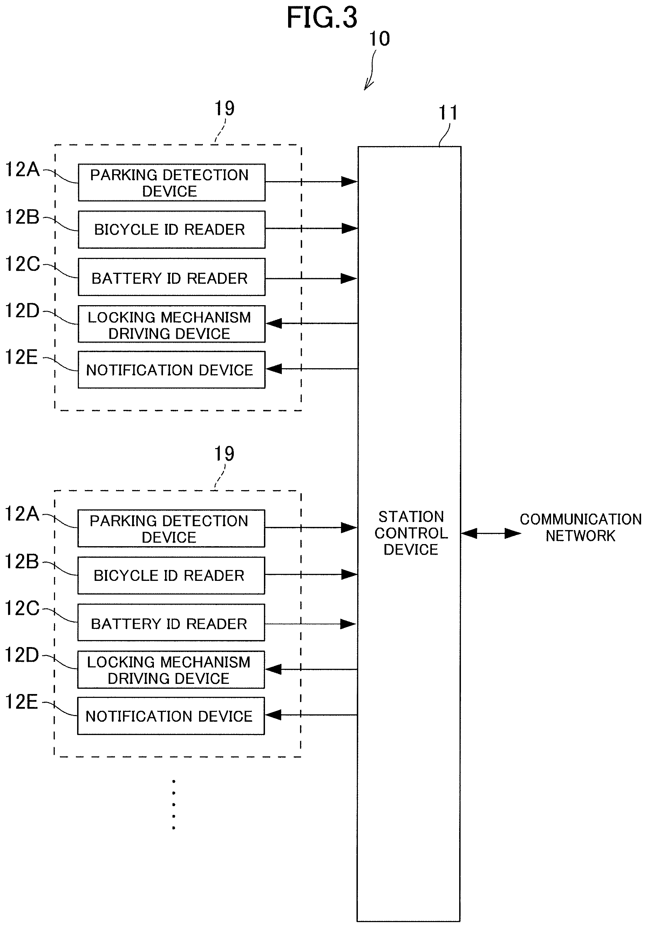

Fig. 3 is a block diagram illustrating a configuration of the parking station system 10. The parking station system 10 includes a station control device 11. In addition, the parking station system 10 includes a parking detection device 12A, a bicycle ID reader 12B, a battery ID reader 12C, a locking mechanism driving device 12D, and a notification device 12E, and these devices are linked to the station control device 11. In an example of the parking station system 10, each of the plurality of locking devices 19 installed in the parking station includes the parking detection device 12A, the bicycle ID reader 12B, the battery ID reader 12C, the locking mechanism driving device 12D, and the notification device 12E. The station control device 11 is configured to communicate with the above-described host device 20 via the communication network. Each of the locking devices 19 may not include any one of the above-described devices, such as the parking detection device 12A. For example, only one battery ID reader 12C may be provided in the parking station.

The parking detection device 12A is a device configured to detect that the electrically assisted bicycle 30 is placed in the parking station. An example of the parking detection device 12A is provided in the locking portion 19a of the locking device 19 into which the locked portion 37d is fitted. In this case, the parking detection device 12A may detect whether or not the locked portion 37d is located in the locking portion 19a, or may detect the operation state of the locking mechanism. The parking detection device 12A may employ a non-contact type sensor, and may employ a contact type sensor. The non-contact type sensor may employ, for example, a reed switch, a hall IC, a photoelectric sensor, or a proximity sensor, such as a magnetic induction type proximity sensor or an electrostatic capacitance type proximity sensor. The contact type sensor may employ a switch which is pressed down by the locked portion 37d, or a circuit which becomes electrically short by coming into contact with the locked portion 37d. In addition, the position of the parking detection device 12A is not limited to the locking portion 19a, and for example, may be embedded in a ground surface of the parking station. In this case, the parking detection device 12A may employ the non-contact type sensor (for example, the hall IC which reacts to a magnet provided in a bottom portion of the electrically assisted bicycle, or the magnetic induction type proximity sensor).

Each of the electrically assisted bicycles 30 is given an unique ID information (hereinafter, this ID information is referred to as the bicycle ID information). The bicycle ID reader 12B is configured to read the bicycle ID information. The bicycle ID reader 12B may employ, for example, an RFID reader. In this case, an RFID tag storing the bicycle ID information is attached to the bicycle 30. The RFID reader is provided, for example, in the locking portion 19a. The RFID tag is provided, for example, in the locked portion 37d. According to the above configuration, reading performance of the bicycle ID information by the RFID reader can be stable. The type of the bicycle ID reader 12B is not limited thereto. For example, the bicycle ID reader 12B may be a bar code reader. In this case, a bar code which shows the bicycle ID information is recorded in the locked portion 37d.

The bicycle ID reader 12B may be used as the above-described parking detection device 12A which detects that the electrically assisted bicycle 30 is placed in the parking station. In other words, in a system where the RFID tag is attached to the locked portion 37d of the bicycle body, or when the bar code is attached on the locked portion 37d, it is possible to recognize that the electrically assisted bicycle 30 is placed in the parking station when the bicycle ID reader 12B reads the information recorded in the RFID tag or the bar code. Accordingly, the dedicated parking detection device 12A may not be used.

Each of the batteries 40 is given the unique ID information of the battery 40 (hereinafter, this ID information is referred to as battery ID information). For example, the battery ID information is given from the administrator of the management system 1 in advance. In an example, the battery ID information is recorded in the battery 40 itself. In another example, the battery ID information is recorded in a preset accessory of the battery 40. The accessory of the battery 40 may employ, for example, a strap or a tag which is attached to the battery 40. In addition, the accessory of the battery 40 may be given to the user and associated with the battery 40. The accessory may employ, for example, an ID card. The accessory may be attachable to and detachable from the battery 40. In other words, an attachment portion which is dedicated for attaching the accessory may be formed on the battery 40. According to this, the user can separate the battery 40 and the accessory from each other and carry these. The battery ID information may be recorded in both the battery 40 itself and the accessory. The battery ID information may be recorded, for example, in the RFID tag which is attached to the battery 40 or the accessory of the battery 40. The bar code which shows the battery ID information may be attached on the battery 40 or the accessory of the battery 40. In the example of Fig. 2A, an RFID tag 40a is attached to the battery 40 itself.

The battery ID reader 12C is configured to read the battery ID information which is stored in the battery 40 or the accessory of the battery 40. When the battery ID information is recorded in the RFID tag, the battery ID reader 12C is the RFID reader. When the battery ID information is shown by the bar code, the battery ID reader 12C is the bar code reader. The battery ID reader 12C reads the battery ID information when the user brings the detection object holding the battery ID information (that is, the battery 40 or the accessory of the battery 40) into the proximity of the battery ID reader 12C. When the battery ID information is recorded in the battery 40 itself, the battery 40 may not necessarily include the accessory.

The battery ID reader 12C is configured to be unable (to inhibit) to detect the battery 40 or the accessory which are the detection object in a state where the bicycle 30 is placed in the parking station, and the battery 40 or the accessory (the accessory which is attached to the battery 40) are attached to the battery receptacle 36. In other words, the battery ID reader 12C is installed at a position (distance) where the battery ID reader 12C cannot read the battery ID information only by returning the electrically assisted bicycle 30 to the parking station. In an example, a detectable distance of the battery ID reader 12C is designed to be shorter than a distance between the detection object and the battery ID reader 12C in a state where the bicycle 30 is placed in the parking station and the detection object is attached to the battery receptacle 36. According to this, an operation of detaching the battery 40 from the bicycle body is essential in order for the user to make the battery ID reader 12C read the battery ID information. The electronic power supply to the electric motor of the bicycle 30 is stopped by detaching the battery 40 from the bicycle body.

A method of limiting the detection by the battery ID reader 12C is not limited to adjustment of the detectable distance. For example, a detectable direction of the battery ID reader 12C may be oriented towards a direction which is different from the detection object. In other words, the detectable direction of the battery ID reader 12C may be oriented towards a direction which is shifted from the detection object in a state where the bicycle 30 is placed in the parking station and the detection object is attached to the battery receptacle 36. Furthermore, in another example, a cover which hinders the detection (communication) by the battery ID reader 12C may be used. In other words, such a cover may positioned between the detection object and the battery ID reader 12C in a state where the bicycle 30 is placed in the parking station and the detection object is attached to the battery receptacle 36.

The locking mechanism driving device 12D includes an actuator which operates the locking mechanism provided in the locking device 19, and a driving circuit thereof. The locking mechanism driving device 12D causes the locking mechanism to be in a locked state or in an unlocked state.

The notification device 12E is a device which generates various notifications to be provided to the user. The notification device 12E in the present embodiment, is configured to generate a guidance which encourages the user to detach the battery 40 (hereinafter, this guidance is referred to as a battery detachment notification). The notification device 12E generates the battery detachment notification when the bicycle 30 is placed in the parking station by the user, that is, when the bicycle 30 is returned to the parking station by the user. An example of the notification device 12E is a sound generating device and a driving circuit thereof. In this case, when the bicycle 30 is placed in the parking station by the user, the notification device 12E generates a predetermined sound as the battery detachment notification. The predetermined sound is, for example, a voice message or a beeping sound which encourages the user to bring the battery 40 (or the accessory) in the proximity of the battery ID reader 12C. In addition, another example of the notification device 12E is an indicator which includes a lighting device, such as a display screen or an LED, and a driving circuit thereof. In this case, the notification device 12E displays a predetermined message or turns on a light in a predetermined mode when the bicycle 30 is returned.

The station control device 11 includes a microprocessor and a memory in which a program to be executed by the microprocessor are stored. In addition, the station control device 11 includes an interface circuit which receives an output signal of the parking detection device 12A, and an interface circuit which receives the ID information from the bicycle ID reader 12B and the battery ID reader 12C. The station control device 11 sends the ID information to the host device 20 via the communication network. In addition, the station control device 11 receives various information from the host device 20. For example, the station control device 11 receives, from the host device 20, information which represents whether or not the user is permitted to use the bicycle 30. Further, the station control device 11 may output control signals to the locking mechanism driving device 12D and the notification device 12E.

When the station control device 11 detects that the bicycle 30 is placed in the parking station by the user through the parking detection device 12A, the station control device 11 in the present embodiment generates the above-described battery detachment notification by driving the notification device 12E. Preferably, when it is detected that the bicycle 30 is placed in the parking station, the station control device 11 immediately generates the battery detachment notification. In another example, when it is detected that the bicycle 30 is placed in the parking station, the station control device 11 may generate the battery detachment notification after a predetermined time elapses from the timing of detection. Here, the predetermined time is, for example, a comparatively short time which is necessary for completing locking the bicycle 30 with the locking mechanism. After generating the battery detachment notification, the station control device 11 stops the battery detachment notification when the station control device 11 detects, through the battery ID reader 12C, that the user brings the detection object holding the battery ID information (that is, the battery 40 or the accessory of the battery 40) into the proximity of the battery ID reader 12C.

The station control device 11 stops the above-described battery detachment notification when at least one of a first condition that the user brings the detection object into the proximity of the battery ID reader 12C and a second condition which is different from the first condition is satisfied. The second condition is related to a period where the battery detachment notification is generated. Specifically, the second condition is that a predetermined time elapses from a point of time when it is detected that the bicycle 30 is placed in the parking station. Alternatively, the second condition is that a period in which the battery detachment notification is generated goes beyond a predetermined amount of time. According to this, even when the user leaves the parking station without detaching the battery 40 from the bicycle body, the battery detachment notification can be stopped. In this case, the station control device 11 may send, to the host device 20, information which represents that the second condition is satisfied. In this case, the host device 20 may send, to the user, information which represents that the battery 40 is maintained in the bicycle 30. Note that, the second condition is not limited to the above. Alternatively, the user or the administrator executes a predetermined operation to the control device 11, the station control device 11 stops the battery detachment notification.

The host device 20 includes a data base regarding information (hereinafter, referred to as user information) which is registered in advance regarding each user, and information (hereinafter, referred to as usage history information) which is related to the usage history of the electrically assisted bicycle 30 of the user.

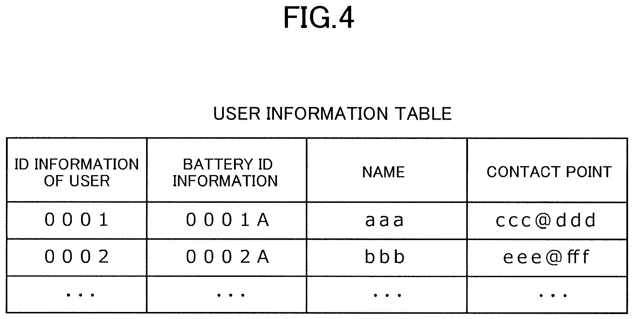

Fig. 4 is a view illustrating an example of a table in which the user information is stored (hereinafter, this table is referred to as a user information table). In the user information table, the name of the user, a contact point of the user, and the battery ID information of the battery 40 which is given to the user, are correlated with the ID information of the user. The contact point of the user may employ a number or an address of a terminal device (for example, a mobile phone) which is owned by the user. In addition, when the user is charged for renting the bicycle 30, changing data with respect to each user and the payment status of each user for the change may be correlated with the ID information of the user in the user information table.

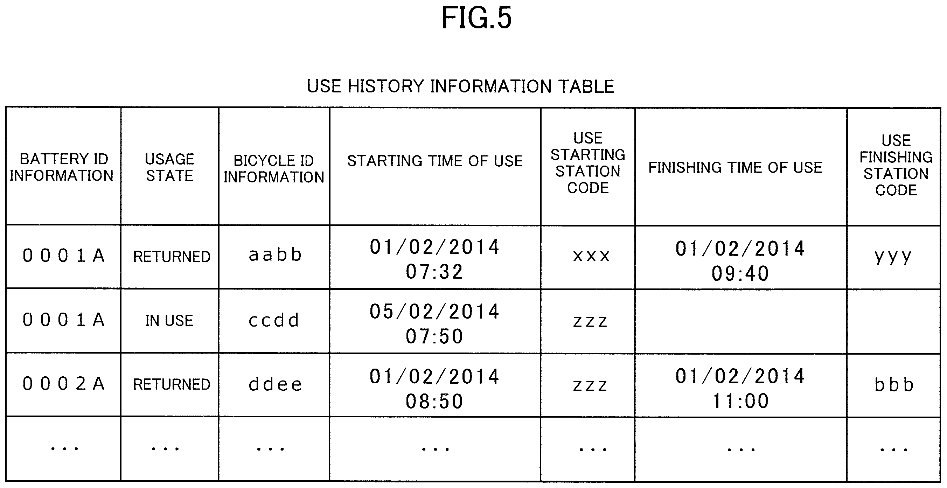

Fig. 5 is a view illustrating an example of the table in which the usage history information is stored (hereinafter, this table is referred to as a usage history information table). In the usage history information table, the bicycle ID information of the used electrically assisted bicycle 30, usage state information which represents whether or not the bicycle is in use, starting time of use, and finishing time of use, are correlated with the ID information of the battery 40. In addition, as illustrated in this drawing, in the usage history information table, a station code of a parking station where the use of the bicycle 30 is started (in Fig. 5, a use starting station code), and a station code of a parking station where the use of the bicycle 30 is finished (in Fig. 5, use finishing station code), are correlated with the battery ID information.

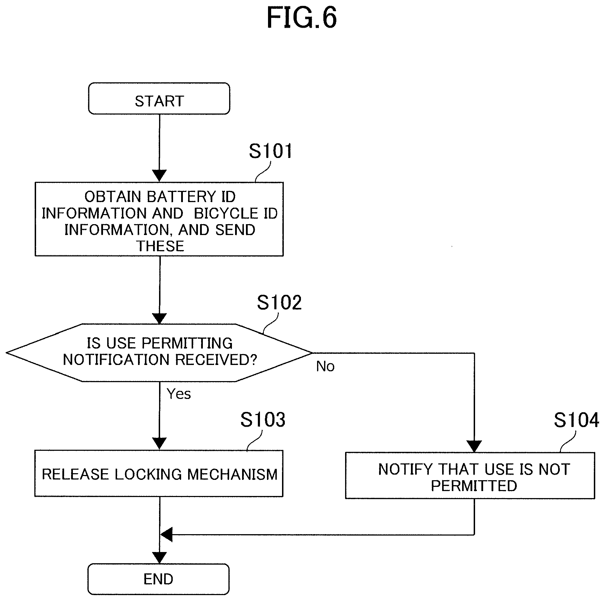

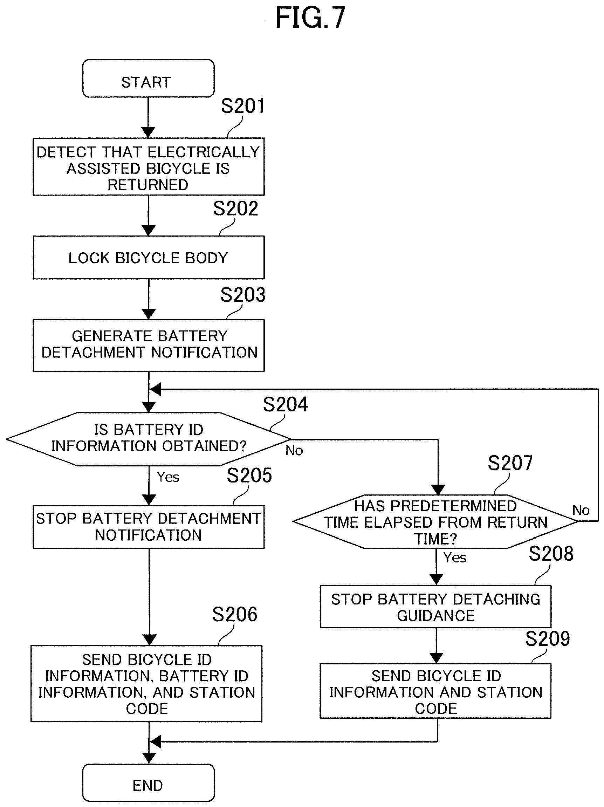

An example of a flow of processing which is performed by the management system 1 will be described. Fig. 6 is a flow chart illustrating an example of processing which is performed by the station control device 11 when the use of the electrically assisted bicycle 30 is started. Fig. 7 is a flow chart illustrating an example of processing which is performed by the station control device 11 when the use of the electrically assisted bicycle 30 is finished (when the electrically assisted bicycle 30 is returned). The processes illustrated in these drawings are merely examples, and may be appropriately modified.

First, with reference to Fig. 6, the processing performed when the use is started will be described. When the user starts using the electrically assisted bicycle 30, first, the user brings the battery 40 or the accessory of the battery 40 into the proximity of the battery ID reader 12C of the parking station system 10. At this time, the station control device 11 obtains the battery ID information through the battery ID reader 12C, obtains the bicycle ID information of the electrically assisted bicycle 30 that the user desires to start using through the bicycle ID reader 12B, and sends those information to the host device 20 (S101).

The host device 20 determines whether or not the user is permitted to use the bicycle 30 based on the battery ID information. In an example, the host device 20 determines whether or not the user is permitted to use the bicycle 30 based on the payment state of the user in the past, the total time of use in the past or the like. When the host device 20 permits the user to use the bicycle 30, the host device 20 sends, the station control device 11, a notification (hereinafter, referred to as a use permitting notification) which represents that the user is permitted to use the bicycle 30, and records the starting time of use and the station code (the use starting station code, refer to Fig. 5) into the usage history information table. In the table, the starting time of use and the use starting station code is correlated with the battery ID information. For example, the station code is recorded in the station control device 11.

The station control device 11 determines whether or not the use permitting notification is received from the host device 20 (S102). When the station control device 11 receives the use permitting notification, the station control device 11 releases the locking mechanism through the locking mechanism driving device 12D (S103). When the station control device 11 does not receive the use permitting notification, the station control device 11 drives the notification device 12E in a predetermined mode, and notifies the user that the use of the bicycle 30 is not permitted (S104).

Next, with reference to Fig. 7, the processing when the use is finished will be described. When the use is finished, first, the station control device 11 detects, through the parking detection device 12A, that the electrically assisted bicycle 30 is placed in the parking station, that is, the bicycle 30 has been returned (S201). The station control device 11 locks the bicycle 30 with the locking mechanism of the locking device 19 (S202). In addition, the station control device 11 generates the battery detachment notification through the notification device 12E (S203). Next, the station control device 11 determines whether or not the battery ID information is obtained, that is, whether or not the detection object (that is, the battery 40 or the accessory of the battery 40 in which the battery ID is recorded) is brought in the proximity of the battery ID reader 12C (S204). When the station control device 11 obtains the battery ID information, the station control device 11 stops the battery detachment notification (S205). In addition, the station control device 11 obtains the bicycle ID information of the returned bicycle through the bicycle ID reader 12B, and sends, to the host device 20, the bicycle ID information, the battery ID information, and the station code which represents the parking station where the bicycle 30 is returned (S206).

The host device 20 updates the usage history information table based on the battery ID information. Specifically, the host device 20 records the finishing time of use and the station code (the use finishing station code, refer to Fig. 5), in the usage history which is associated with the battery ID information which is recorded when the use is started.

When the battery ID information cannot be obtained in the processing in S204, the station control device 11 determines whether or not the predetermined time has elapsed from the point of time (return time) when it is detected that the bicycle 30 is placed in the parking station (S207). When the predetermined time has not elapsed from the return time, the process returns to S204.

Meanwhile, when the predetermined time has elapsed from the return time, the station control device 11 stops the notification device 12E from generating the battery detachment notification (S208). In addition, the station control device 11 obtains the bicycle ID information of the returned bicycle, and sends this bicycle ID information, and a notification that the predetermined time has elapsed from the return time to the host device 20 (S209). At this time, the host device 20 refers to the usage history information table and the user information table, and identifies the user of the returned bicycle 30 based on the bicycle ID information. In this situation, the user still may have the battery 40 mounted on the bicycle body, or may have detached the battery 40 from the bicycle body without the operation of bringing the detection object into the proximity of the battery ID reader 12C. In an example, as illustrated above, the contact point of the user (the address or the number of the user's terminal device) which is correlated with the ID information of the user is recorded the user information table. The host device 20 sends a notification that the battery 40 is still mounted on the bicycle body, or a notification that the operation of bringing the detection object into the proximity of the battery ID reader 12C has not been performed, to the contact point of the user of the returned bicycle 30 (hereinafter, these notifications are referred to as warning notifications). The above process is an example of the processing which is performed when the electrically assisted bicycle 30 is returned.

The processing when the electrically assisted bicycle 30 is returned is not limited to the description above. For example, after the station control device 11 sends the bicycle ID information and the battery ID information to the host device 20 in S206, the host device 20 may determine whether or not the user has appropriately returned the electrically assisted bicycle 30. For example, the host device 20 refers to the usage history information table, and determines whether the bicycle ID information of the returned bicycle 30 and the battery ID information which is associated with the bicycle ID information match each other. When the bicycle ID information and the battery ID information do not match each other, since the method of using the bicycle 30 by the user may not be appropriate, the host device 20 may send, to the station control device 11, a notification that the method of the usage is not appropriate. At this time, the station control device 11 may drive the notification device 12E in a predetermined mode.

In addition, when the information which is related to the state of the battery 40, such as the number of times of charging and discharging or a period of use of the battery 40 is stored in the memory inside the battery 40, the battery ID reader 12C may be configured to read those information in addition to the battery ID information. In this case, when the user brings the battery 40 into the proximity of the battery ID reader 12C, the battery ID reader 12C may read these information which are related to the state of the battery 40, and may send these information together with the battery ID information to the host device 20. According to this, the host device 20 can manage the state of the battery 40 which is owned by the user.

In the management system 1 described above, the electrically assisted bicycle 30 includes the electric motor 32 for assisting in the pedal force applied to the pedal 31 by the user, and the battery receptacle 36. The battery 40 for supplying the electronic power to the electric motor 32 can be attached to and detached from the battery receptacle 36. The parking station system 10 includes the locking device 19 for connecting the electrically assisted bicycle 30, the device 12A which detects that the electrically assisted bicycle 30 is placed in the parking station, the notification device 12E which generates the predetermined guidance when the electrically assisted bicycle 30 is disposed in the parking station by the user, the battery ID reader 12C configured to detect the proximity of the detection object (that is, battery 40 or the preset accessory of the battery 40), and the station control device 11 which stops the guidance of the notification device 12E when the proximity of the detection device is detected.

In the management system 1, the battery or the accessory of the battery has a function of stopping the guidance from the notification device 12E. In order for the user to stop the guidance from the notification device, the operation of bringing the battery or the accessory in the proximity of the battery ID reader 12C is necessary. For this reason, the user surely detaches the battery 40 from the bicycle body, and a state where the bicycle 30 is still supplied with electronic power does not continue for a long time. As a result, a situation where the large force generated by driving the electric motor 32 acts on the locking device 19 or the bicycle body is unlikely to occur, and it is possible to reduce necessity of reinforcing the locking device 19 or the bicycle body of the electrically assisted bicycle 30.

In addition, the present teaching is not limited to the management system 1 or the parking station system 10 which is described above, and may have various modifications done thereto, as long as they remain in accordance with the appended claims.

For example, in the management system 1, the battery ID reader 12C is used as a device for detecting the proximity of the battery 40 or the accessory of the battery 40. However, the device for detecting the proximity of the battery 40 or the like may not necessarily have the function of reading the battery ID information. In this case, the device for detecting the proximity of the battery 40 or the like may employ various sensors, such as the non-contact type sensor or the contact type sensor, similarly to the parking detection device 12A.

## Claims

1. A parking station system (10) configured to be installed in a parking station (A1,A2,A3) for electrically assisted bicycles (30) each including an electric motor (32) for assisting a pedal force applied to a pedal (31), and a battery (40) which can be attached to and detached from a bicycle body for supplying electronic power to the electric motor (32), the parking station system (10) comprising:
a plurality of locking devices (19) each configured to lock one of the electrically assisted bicycles;
a first detection device (12A) configured to detect that the bicycle is placed in the parking station (A1,A2,A3);
a second detection device (12C) configured to detect that a detection object is proximate to the second detection device (12C), where the detection object is the battery (40) or an accessory of the battery (40);
a notification device (12E) configured to generate a guidance as a battery detachment notification when the first detection device (12A) detects that the bicycle is placed in the parking station (A1,A2,A3); and
a control device (11) configured to generate the battery detachment notification by driving the notification device (12E) and configured to stop the notification device (12E) from generating the guidance when the second detection device (12C) detects the detection object is proximate to the second detection device (12C) as a first condition,
wherein
the control device (11) is configured to stop the notification device (12E) from generating the guidance when at least one of the first condition and a second condition which is different from the first condition is satisfied, wherein the second condition is related to a period where the battery detachment notification is generated by the control device (11), **characterised in that**
the second condition is that a predetermined time elapses from a point of time when it is detected that the bicycle (30) is placed in the parking station, alternatively the second condition is that a period in which the battery detachment notification is generated goes beyond a predetermined amount of time, alternatively the second condition is that a user or an administrator executes a predetermined operation to the control device (11), the control device (11) stops the battery detachment notification.

2. A parking station system (10) according to claim 1, wherein the second detection device (12C) is configured to inhibit detecting of the detection object in a state where the bicycle is placed in the parking station (A1,A2,A3) and the detection object is attached to a battery receptacle (36) of the electrically assisted bicycle (30).

3. A parking station system (10) according to claim 2, wherein a detectable distance of the second detection device (12C) is shorter than a distance between the detection object and the second detection device (12C) in a state where the electrically assisted bicycle (30) is placed in the parking station (A1,A2,A3) and the detection object is attached to the battery receptacle (36).

4. A parking station system (10) according to any one of claims 1 to 3, wherein ID information which is unique to the battery (40) is recorded in the detection object, and the second detection device (12C) is configured to read the ID information.

5. A parking station system (10) according to any one of claims 1 to 4, wherein the accessory of the battery (40) is associated with the battery (40).

6. A parking station system (10) according to any one of claims 1 to 6, the control device (11) is configured to notify a host device (20) that the second condition is satisfied when the second condition is satisfied.

7. A parking station system (10) according to claim 6, the host device (20) is configured to notify the user of a predetermined information.

8. A parking station system (10) according to any one of claims 1 to 7, wherein the first detection device (12A) is a sensor configured to detect that the locking device (19) and the electrically assisted bicycle (30) are connected to each other.

9. A parking station system (10) according to any one of claims 1 to 7, wherein the first detection device (12A) is a communication device which is provided in the parking station (A1,A2,A3), and the first detection device (12A) is configured to communicate with a communication module which is provided in the bicycle body or the battery (40).

10. A management system (1) comprising an electrically assisted bicycle (30) and a parking station system (10) according to claim 1, wherein the electrically assisted bicycle (30) includes:
an electric motor (32) configured to assist a pedal force applied to a pedal (31), and
a battery receptacle (36) configured so that a battery (40) for supplying electronic power to the electric motor (32) is attached to and detached from the battery receptacle (36), and
a locking mechanism configured to connect the bicycle (30) to the locking device (19) of the parking station system (10).

11. A method for management of electrically assisted bicycles (30) and at least one parking station (A1,A2,A3) for parking the electrically assisted bicycles (30), wherein each of the electrically assisted bicycles (30) is connectable with the parking station (A1,A2,A3), the method comprises:
detecting that the electrically assisted bicycle (30) is placed in the parking station (A1,A2,A3),
detecting that a detection object is proximate to a predetermined position, where the detection object is a battery (40) or an accessory of the battery (40) of the electrically assisted bicycle (30),
generating a guidance as a battery detachment notification when it has been detected that the electrically assisted bicycle (30) is placed in the parking station (A1,A2,A3), and stopping generating the guidance when the proximity of the detection object has been detected as a first condition, further comprising
stopping generating the guidance when at least one of the first condition and a second condition which is different from the first condition is satisfied, wherein the second condition is related to a period where the battery detachment notification is generated, **characterised in that**
the second condition is that a predetermined time elapses from a point of time when it is detected that the bicycle (30) is placed in the parking station,
alternatively the second condition is that a period in which the battery detachment notification is generated goes beyond a predetermined amount of time,
alternatively the second condition is that a user or an administrator executes a predetermined operation to stop the battery detachment notification.

## Patentansprüche

1. Ein Park-Station-System (10), das konfiguriert ist, um in einer Park-Station (A1, A2, A3) für elektrisch unterstützte Fahrräder (30), die jeweils einen Elektro-Motor (32) zur Unterstützung einer Pedalkraft, die auf ein Pedal (31) ausgeübt ist, und eine Batterie (40), die an einem Fahrrad-Körper angebracht und von diesem abgenommen werden kann, um den Elektro-Motor (32) mit elektronischer Energie zu versorgen, beinhalten, installiert zu werden, das Park-Station-System (10) umfasst:
eine Mehrzahl von Verriegelungs-Vorrichtungen (19), die jeweils konfiguriert sind, um eines der elektrisch unterstützten Fahrräder zu verriegeln;
eine erste Erfassungs-Vorrichtung (12A), die konfiguriert ist, um zu erfassen, dass das Fahrrad in der Park-Station (A1, A2, A3) platziert ist;
eine zweite Erfassungs-Vorrichtung (12C), die konfiguriert ist, um zu erfassen, dass ein Erfassungs-Objekt in der Nähe der zweiten Erfassungs-Vorrichtung (12C) platziert ist, wobei das Erfassungs-Objekt die Batterie (40) oder ein Zubehörteil der Batterie (40) ist;
eine Benachrichtigungs-Vorrichtung (12E), die konfiguriert ist, um eine Anleitung als eine Batterie-Entfernungs-Benachrichtigung zu erzeugen, wenn die erste Erfassungs-Vorrichtung (12A) erfasst, dass das Fahrrad in der Park-Station (A1, A2, A3) platziert ist; und
eine Steuer-Vorrichtung (11), die konfiguriert ist, um die Batterie-Entfernungs-Benachrichtigung durch Ansteuern der Benachrichtigungs-Vorrichtung (12E) zu erzeugen, und die konfiguriert ist, um die Benachrichtigungs-Vorrichtung (12E) zu stoppen, die Anleitung zu erzeugen, wenn die zweite Erfassungs-Vorrichtung (12C) erfasst, dass das Erfassungs-Objekt in der Nähe der zweiten Erfassungs-Vorrichtung (12C) ist, als eine erste Bedingung, wobei
die Steuer-Vorrichtung (11) konfiguriert ist, um die Benachrichtigungs-Vorrichtung (12E) zu stoppen, die Anleitung zu erzeugen, wenn mindestens eine der ersten Bedingung und einer zweiten Bedingung, die sich von der ersten Bedingung unterscheidet, erfüllt ist, wobei die zweite Bedingung mit einer Periode zusammenhängt, in der die Batterie-Entfernungs-Benachrichtigung von der Steuer-Vorrichtung (11) erzeugt wird, **dadurch gekennzeichnet , dass** die zweite Bedingung ist, dass eine vorbestimmte Zeit von einem Zeitpunkt an verstreicht, an dem erfasst ist, dass das Fahrrad (30) in der Park-Station platziert ist, alternativ ist die zweite Bedingung, dass eine Periode, in der die Batterie-Entfernungs-Benachrichtigung erzeugt wird, über eine vorbestimmte Zeitdauer hinausgeht, alternativ ist die zweite Bedingung, dass ein Benutzer oder ein Administrator eine vorbestimmte Operation an der Steuer-Vorrichtung (11) ausführt, wobei die Steuer-Vorrichtung (11) die Batterie-Entfernungs-Benachrichtigung stoppt.

2. Ein Park-Station-System (10) gemäß Anspruch 1, wobei die zweite Erfassungs-Vorrichtung (12C) konfiguriert ist, um die Erfassung des Erfassungs-Objekts in einem Zustand zu verhindern, in dem das Fahrrad in der Park-Station (A1, A2, A3) platziert ist und das Erfassungs-Objekt an einer Batterie-Aufnahme (36) des elektrisch unterstützten Fahrrads (30) angebracht ist.

3. Ein Park-Station-System (10) gemäß Anspruch 2, wobei ein erfassbarere Abstand der zweiten Erfassungs-Vorrichtung (12C) kürzer ist als ein Abstand zwischen dem Erfassungs-Objekt und der zweiten Erfassungs-Vorrichtung (12C) in einem Zustand, in dem das elektrisch unterstützte Fahrrad (30) in der Park-Station (A1, A2, A3) platziert ist und das Erfassungs-Objekt an der Batterie-Aufnahme (36) angebracht ist.

4. Ein Park-Station-System (10) gemäß irgendeinem der Ansprüche 1 bis 3, wobei in dem Erfassungs-Objekt ID-Informationen, die für die Batterie (40) eindeutig sind, aufgezeichnet sind, und die zweite Erfassungs-Vorrichtung (12C) konfiguriert ist, um die ID-Informationen zu lesen.

5. Ein Park-Station-System (10) gemäß irgendeinem der Ansprüche 1 bis 4, wobei das Zubehör der Batterie (40) der Batterie (40) zugeordnet ist.

6. Ein Park-Station-System (10) gemäß irgendeinem der Ansprüche 1 bis 6, die Steuer-Vorrichtung (11) ist konfiguriert, um einer Host-Vorrichtung (20) mitzuteilen, dass die zweite Bedingung erfüllt ist, wenn die zweite Bedingung erfüllt ist.

7. Ein Park-Station-System (10) gemäß Anspruch 6, wobei die Host-Vorrichtung (20) konfiguriert ist, um dem Benutzer eine vorbestimmte Information mitzuteilen.

8. Ein Park-Station-System (10) gemäß irgendeinem der Ansprüche 1 bis 7, wobei die erste Erfassungs-Vorrichtung (12A) ein Sensor ist, der konfiguriert ist, um zu erfassen, dass die S Verriegelungs-Vorrichtung (19) und das elektrisch unterstützte Fahrrad (30) miteinander verbunden sind.

9. Ein Park-Station-System (10) gemäß irgendeinem der Ansprüche 1 bis 7, wobei die erste Erfassungs-Vorrichtung (12A) eine Kommunikations-Vorrichtung ist, die in der Park-Station (A1, A2, A3) vorgesehen ist, und die erste Erfassungs-Vorrichtung (12A) konfiguriert ist, um mit einem Kommunikationsmodul zu kommunizieren, das in dem Fahrrad-Körper oder der Batterie (40) vorgesehen ist.

10. Ein Management-System (1), das ein elektrisch unterstütztes Fahrrad (30) und ein Park-Station-System (10) gemäß Anspruch 1 umfasst, wobei das elektrisch unterstützte Fahrrad (30) beinhaltet:
einen Elektro-Motor (32), der konfiguriert ist, um Pedalkraft, die auf ein Pedal (31) ausgeübt ist, zu unterstützen, und
eine Batterie-Aufnahme (36), die konfiguriert ist, so dass eine Batterie (40) zur Versorgung des Elektro-Motors (32) mit elektronischer Energie an der Batterie-Aufnahme (36) angebracht und von ihr gelöst wird, und
einen Verriegelungs-Mechanismus, der konfiguriert ist, um das Fahrrad (30) mit der Verriegelungs-Vorrichtung (19) des Park-Station-Systems (10) zu verbinden.

11. Verfahren zur Verwaltung von elektrisch unterstützten Fahrrädern (30) und mindestens einer Park-Station (A1, A2, A3) zum Parken der elektrisch unterstützten Fahrräder (30), wobei jedes der elektrisch unterstützten Fahrräder (30) mit der Park-Station (A1, A2, A3) verbindbar ist, das Verfahren umfasst:
Erfassen, dass das Fahrrad in der Park-Station (A1, A2, A3) platziert ist;
Erfassen, dass ein Erfassungs-Objekt in der Nähe der zweiten Erfassungs-Vorrichtung (12C) platziert ist, wobei das Erfassungs-Objekt die Batterie (40) oder ein Zubehörteil der Batterie (40) des elektrisch unterstützten Fahrrades (30) ist;
Erzeugen einer Anleitung als eine Batterie-Entfernungs-Benachrichtigung, wenn die erste Erfassungs-Vorrichtung (12A) erfasst, dass das Fahrrad in der Park-Station (A1, A2, A3) platziert ist; und
Stoppen der Erzeugung der Batterie-Entfernungs-Benachrichtigung, wenn die Nähe des Erfassungs-Objekt als eine erste Bedingung erfasst ist, weiterhin umfasst Stoppen der Erzeugung der Anleitung, wenn mindestens eine der ersten Bedingung und einer zweiten Bedingung, die sich von der ersten Bedingung unterscheidet, erfüllt ist, wobei die zweite Bedingung mit einer Periode zusammenhängt, in der die Batterie-Entfernungs-Benachrichtigung von der Steuer-Vorrichtung (11) erzeugt wird,
**dadurch gekennzeichnet, dass** die zweite Bedingung ist, dass eine vorbestimmte Zeit von einem Zeitpunkt an verstreicht, an dem erfasst ist, dass das Fahrrad (30) in der Park-Station platziert ist, alternativ ist die zweite Bedingung, dass eine Periode, in der die Batterie-Entfernungs-Benachrichtigung erzeugt wird, über eine vorbestimmte Zeitdauer hinausgeht, alternativ ist die zweite Bedingung, dass ein Benutzer oder ein Administrator eine vorbestimmte Operation an der Steuer-Vorrichtung (11) um die Batterie-Entfernungs-Benachrichtigung zu stoppen, ausführt.

## Revendications

1. Système de station de stationnement (10) configuré pour être installé dans une station de stationnement (A1, A2, A3) pour bicyclettes à assistance électrique (30) comprenant chacune un moteur électrique (32) pour assister une force de pédalage appliquée à une pédale (31), et une batterie (40) qui peut être attachée sur un corps de bicyclette et détachée de celui-ci pour fournir une puissance électronique au moteur électrique (32), le système de station de stationnement (10) comprenant :
une pluralité de dispositifs de verrouillage (19) configurés chacun pour verrouiller une des bicyclettes à assistance électrique ;
un premier dispositif de détection (12A) configuré pour détecter que la bicyclette est placée dans la station de stationnement (A1, A2, A3) ;
un second dispositif de détection (12C) configuré pour détecter qu'un objet de détection est proche du second dispositif de détection (12C), l'objet de détection étant la batterie (40) ou un accessoire de la batterie (40) ;
un dispositif de notification (12E) configuré pour générer une instruction en tant que notification de détachement de batterie lorsque le premier dispositif de détection (12A) détecte que la bicyclette est placée dans la station de stationnement (A1, A2, A3) ; et
un dispositif de commande (11) configuré pour générer la notification de détachement de batterie par une commande au dispositif de notification (12E) et configuré pour stopper la génération de l'instruction par le dispositif de notification (12E) lorsque le second dispositif de détection (12C) détecte la proximité de l'objet de détection par rapport au second dispositif de détection (12C) en tant que première condition,
dans lequel
le dispositif de commande (11) est configuré pour stopper la génération de l'instruction par le dispositif de notification (12E) lorsqu'au moins une condition entre la première condition et une seconde condition qui est différente de la première condition est remplie, dans lequel la seconde condition est relative à une période pendant laquelle la notification de détachement de batterie est générée par le dispositif de commande (11),
**caractérisé en ce que**
la seconde condition réside dans le fait qu'un laps de temps prédéterminé s'écoule à partir d'un instant où il est détecté que la bicyclette (30) est placée dans la station de stationnement, ou bien la seconde condition réside dans le fait qu'une période pendant laquelle la notification de détachement de batterie est générée s'étend au-delà d'une durée prédéterminée, ou bien la seconde condition réside dans le fait qu'un utilisateur ou un administrateur exécute une opération prédéterminée sur le dispositif de commande (11), le dispositif de commande (11) stoppe la notification de détachement de batterie.

2. Système de station de stationnement (10) selon la revendication 1, dans lequel le second dispositif de détection (12C) est configuré pour empêcher une détection de l'objet de détection dans un état où la bicyclette est placée dans la station de stationnement (A1, A2, A3) et où l'objet de détection est attaché sur un logement de batterie (36) de la bicyclette à assistance électrique (30).

3. Système de station de stationnement (10) selon la revendication 2, dans lequel une distance détectable du second dispositif de détection (12C) est inférieure à une distance entre l'objet de détection et le second dispositif de détection (12C) dans un état où la bicyclette à assistance électrique (30) est placée dans la station de stationnement (A1, A2, A3) et où l'objet de détection est attaché sur le logement de batterie (36).

4. Système de station de stationnement (10) selon l'une quelconque des revendications 1 à 3, dans lequel une information ID qui est propre à la batterie (40) est enregistrée dans l'objet de détection, et le second dispositif de détection (12C) est configuré pour lire l'information ID.

5. Système de station de stationnement (10) selon l'une quelconque des revendications 1 à 4, dans lequel l'accessoire de la batterie (40) est associé à la batterie (40).

6. Système de station de stationnement (10) selon l'une quelconque des revendications 1 à 6, dans lequel le dispositif de commande (11) est configuré pour notifier à un dispositif hôte (20) que la seconde condition est remplie lorsque la seconde condition est remplie.

7. Système de station de stationnement (10) selon la revendication 6, dans lequel le dispositif hôte (20) est configuré pour notifier une information prédéterminée à l'utilisateur.

8. Système de station de stationnement (10) selon l'une quelconque des revendications 1 à 7, dans lequel le premier dispositif de détection (12A) est un capteur configuré pour détecter que le dispositif de verrouillage (19) et la bicyclette à assistance électrique (30) sont connectés l'un à l'autre.

9. Système de station de stationnement (10) selon l'une quelconque des revendications 1 à 7, dans lequel le premier dispositif de détection (12A) est un dispositif de communication qui est situé dans la station de stationnement (A1, A2, A3), et le premier dispositif de détection (12A) est configuré pour communiquer avec un module de communication qui est situé dans le corps de bicyclette ou dans la batterie (40).

10. Système de gestion (1) comprenant une bicyclette à assistance électrique (30) et un système de station de stationnement (10) selon la revendication 1, dans lequel la bicyclette à assistance électrique (30) comprend :
un moteur électrique (32) configuré pour assister une force de pédalage appliquée à une pédale (31), et un logement de batterie (36) configuré de façon qu'une batterie (40) destinée à fournir une puissance électronique au moteur électrique (32) soit attachée sur le logement de batterie (36) et détachée de celui-ci, et
un mécanisme de verrouillage configuré pour connecter la bicyclette (30) au dispositif de verrouillage (19) du système de station de stationnement (10).

11. Procédé de gestion de bicyclettes à assistance électrique (30) et d'au moins une station de stationnement (A1, A2, A3) destinée au stationnement des bicyclettes à assistance électrique (30), dans lequel chacune des bicyclettes à assistance électrique (30) peut être connectée à la station de stationnement (A1, A2, A3), le procédé consistant à :
détecter que la bicyclette à assistance électrique (30) est placée dans la station de stationnement (A1, A2, A3),
détecter qu'un objet de détection est proche d'une position prédéterminée, l'objet de détection étant une batterie (40) ou un accessoire de la batterie (40) de la bicyclette à assistance électrique (30),
générer une instruction en tant que notification de détachement de batterie lorsqu'il a été détecté que la bicyclette à assistance électrique (30) est placée dans la station de stationnement (A1, A2, A3), et
stopper la génération de l'instruction lorsque la proximité de l'objet de détection a été détectée en tant que première condition, consistant en outre à
stopper la génération de l'instruction lorsqu'au moins une condition entre la première condition et une seconde condition qui est différente de la première condition est remplie, dans lequel la seconde condition est relative à une période pendant laquelle la notification de détachement de batterie est générée,
**caractérisé en ce que**
la seconde condition réside dans le fait qu'un laps de temps prédéterminé s'écoule à partir d'un instant où il est détecté que la bicyclette (30) est placée dans la station de stationnement,
ou bien la seconde condition réside dans le fait qu'une période pendant laquelle la notification de détachement de batterie est générée s'étend au-delà d'une durée prédéterminée,
ou bien la seconde condition réside dans le fait qu'un utilisateur ou un administrateur exécute une opération prédéterminée pour stopper la notification de détachement de batterie.
